# EUROPÄISCHE PATENTANMELDUNG

(11) **EP 3 528 086 A1**
(43) Veröffentlichungstag der Anmeldung: **21.08.2019**
(21) Anmeldenummer: 19154981.5
(22) Anmeldetag: 01.02.2019
(51) Int. Cl.: G06F 1/18, G06F 21/86

(54) **ELEKTRISCHES GERÄT UND GEHÄUSE FÜR EIN ELEKTRISCHES GERÄT**

(30) Priorität: 15.02.2018 DE 102018103450
(71) Anmelder: Fujitsu Client Computing Limited, Kawasaki-shi, Kanagawa 211-8588 (JP)
(72) Erfinder: Kannler, Bernhard, 80807 München (DE)
(74) Vertreter: Epping - Hermann - Fischer

(57) **Zusammenfassung**

Die Erfindung betrifft ein elektrisches Gerät, insbesondere einen Computer (1), umfassend ein Gehäuse (2) mit einem ersten und wenigstens einem zweiten Öffnungszustand. Das elektrische Gerät umfasst ferner einen Öffnungsdetektor. Das elektrische Gerät weist eine erste Einbauposition und wenigstens eine zweite Einbauposition für den Öffnungsdetektor auf. Der Öffnungsdetektor detektiert, wenn er an der ersten Einbauposition angeordnet ist, sowohl den ersten als auch den wenigstens einen zweiten Öffnungszustand. Ist der Öffnungsdetektor an der wenigstens einen zweiten Einbauposition angeordnet, detektiert der Öffnungsdetektor nur den wenigstens einen zweiten Öffnungszustand.

Die Erfindung betrifft ferner ein Gehäuse für ein derartiges elektrisches Gerät.

## Beschreibung

Die vorliegende Erfindung betrifft ein elektrisches Gerät, insbesondere einen Computer, umfassend ein Gehäuse und einen Öffnungsdetektor. Die Erfindung betrifft ferner ein Gehäuse für ein elektrisches Gerät, insbesondere für einen Computer.

Elektrische Geräte mit Gehäusen, die mittels Öffnungsdetektoren überwacht werden, sind aus dem Stand der Technik bekannt. Derartige Öffnungsdetektoren werden unter anderem dazu verwendet, ein unbefugtes Öffnen des Gehäuses und somit einen unbefugten Zugriff auf sensible Bauteile des elektrischen Geräts und sensible Daten zu registrieren. Für einen Betrieb derartiger elektrischer Geräte ist es jedoch störend, wenn ein befugtes Öffnen des Gehäuses, beispielsweise zu Wartungszwecken einzelner Bauteile des elektrischen Geräts, stets einen Alarm auslöst.

Aufgabe der Erfindung ist es, ein elektrisches Gerät und ein Gehäuse für ein elektrisches Gerät zu beschreiben, die das oben genannte Problem lösen.

Die oben genannte Aufgabe wird gemäß einem ersten Aspekt durch ein elektrisches Gerät, insbesondere einen Computer, umfassend ein Gehäuse mit einem ersten und wenigstens einem zweiten Öffnungszustand gelöst. Das elektrische Gerät umfasst ferner einen Öffnungsdetektor. Das elektrische Gerät weist eine erste Einbauposition und wenigstens eine zweite Einbauposition für den Öffnungsdetektor auf. Der Öffnungsdetektor detektiert, wenn er an der ersten Einbauposition angeordnet ist, sowohl den ersten als auch den wenigstens einen zweiten Öffnungszustand. Ist der Öffnungsdetektor an der wenigstens einen zweiten Einbauposition angeordnet, so detektiert der Öffnungsdetektor nur den wenigstens einen zweiten Öffnungszustand.

Vorteilhaft hierbei ist es, dass je nach Bedarf der Öffnungsdetektor an der ersten oder der zweiten Einbauposition angeordnet werden kann. Auf diese Weise ist es möglich, durch Auswahl der Einbauposition für den Öffnungsdetektor, nur den wenigstens einen zweiten Öffnungszustand oder sowohl den ersten als auch den wenigstens einen zweite Öffnungszustand zu detektieren.

Unterschiedliche Öffnungszustände des Gehäuses sind beispielsweise dadurch gekennzeichnet, dass unterschiedliche Gehäuseöffnungen des Gehäuses geöffnet bzw. verschlossen sind oder eine Gehäuseöffnung des Gehäuses unterschiedlich weit geöffnet wird. Auf diese Weise können, wenn der Öffnungsdetektor an der zweiten Einbauposition angeordnet ist, Bauteile des elektrischen Geräts, auf die im ersten Öffnungszustand physikalisch zugegriffen werden kann, beispielsweise gewartet oder ausgetauscht werden, ohne dass der Öffnungsdetektor ein unbefugtes Öffnen des Gehäuses detektiert.

In wenigstens einer Ausgestaltung gewährt der erste Öffnungszustand einen Zugriff auf einen ersten Bereich des elektrischen Geräts und der wenigstens eine zweite Öffnungszustand Zugriff auf wenigstens einen zweiten Bereich des elektrischen Geräts. Beispielsweise ist in dem ersten Bereich eine Festplatte angeordnet, sodass, wenn der Öffnungsdetektor an der ersten Einbauposition angeordnet ist, ein physikalischer Zugriff auf die Festplatte detektiert wird, während, wenn der Öffnungsdetektor an der zweiten Einbauposition angeordnet ist, ein physikalischer Zugriff auf die Festplatte nicht detektiert wird.

In einer vorteilhaften Ausgestaltung ist der erste Bereich des elektrischen Geräts von dem wenigstens einen zweiten Bereich des elektrischen Geräts räumlich getrennt. Auf diese Weise wird sichergestellt, dass ein physikalischer Eingriff auf den wenigstens einen zweiten Bereich des elektrischen Geräts nicht möglich ist, wenn sich das Gerät in dem ersten Öffnungszustand befindet, d.h. ein Zugriff nur auf den ersten Bereich gewährt wird.

In einer vorteilhaften Ausgestaltung umfasst das Gehäuse eine erste Gehäuseabdeckung und einen Gehäuseboden. Der Öffnungsdetektor ist, wenn er an der ersten Einbauposition angebracht ist, an der ersten Gehäuseabdeckung angeordnet. Die erste Gehäuseabdeckung oder der Gehäuseboden weist wenigstens einen sich in einer ersten Richtung erstreckenden Stift auf. Entsprechend weist der Gehäuseboden oder die erste Gehäuseabdeckung wenigstens ein Loch auf. Der wenigstens eine Stift greift bei geschlossener erster Gehäuseabdeckung in das wenigstens eine Loch ein, so dass ein Herausziehen der ersten Gehäuseabdeckung in einer zweiten, zu der ersten Richtung senkrecht stehenden Richtung verhindert wird.

Vorteilhaft hierbei ist es, dass eine bestimmte Richtung zur Öffnung der ersten Gehäuseabdeckung durch die Richtung, in der sich der wenigstens eine Stift erstreckt, vorgegeben ist. Insbesondere wird die vorgegebene Richtung so gewählt, dass ein manuelles Blockieren des Öffnungsdetektionsschalters beim Öffnen der ersten Gehäuseabdeckung nicht möglich ist oder zumindest erschwert wird, beispielsweise indem als vorgegebene Richtung zur Öffnung der ersten Gehäuseabdeckung eine Richtung gewählt wird, in der der Öffnungsdetektor bereits auslöst, wenn die erste Gehäuseabdeckung nur wenige Millimeter in diese Richtung bewegt wird.

In einer vorteilhaften Ausgestaltung umfasst das elektrische Gerät ferner eine Vorrichtung zur Auswertung eines Zustands des Öffnungsdetektors, die dazu eingerichtet ist, in Abhängigkeit des durch den Öffnungsdetektor detektierten Öffnungszustand wenigstens eines der folgenden Ereignisse zu bewirken:
- einen visuellen, auditiven oder sonstigen Alarm,
- einen Eintrag in ein Protokoll, oder
- einen Eingriff auf eine Stromversorgung oder eine sonstige Komponente des elektrischen Geräts.

Der Zustand des Öffnungsdetektors entspricht dem durch den Öffnungsdetektor detektierten Öffnungszustand des Gehäuses. Ein Eingriff auf eine Stromversorgung kann beispielsweise das Abschalten eines Netzteils des elektrischen Geräts umfassen.

In wenigstens einer Ausgestaltung bewirkt die Vorrichtung zur Auswertung des Zustands des Öffnungsdetektors unterschiedliche Ereignisse in Abhängigkeit davon, ob der Öffnungsdetektor an der ersten Einbauposition oder der wenigstens einen zweiten Einbauposition angeordnet ist. Hierbei ist es vorteilhaft, dass je nachdem, ob beispielsweise das gesamte elektrische Gerät oder nur ein Bereich des elektrischen Geräts durch den Öffnungsdetektor überwacht wird, unterschiedliche Ereignisse erzeugt werden können. Die verwendete Einbauposition kann beispielsweise in einem nicht-flüchtigen Speicher der Vorrichtung zur Auswertung gespeichert werden, zusammen mit zugehörigen Ereignissen, die bewirkt werden sollen.

Gemäß einem zweiten Aspekt wird die oben genannte Aufgabe durch ein Gehäuse für ein elektrisches Gerät, insbesondere einen Computer, aufweisend eine erste und wenigstens eine zweite Gehäuseabdeckung gelöst. Das Gehäuse weist ferner eine erste und wenigstens eine zweite Einbauposition für einen Öffnungsdetektor auf. An der ersten Einbauposition ist ein Öffnungsdetektor derart an dem Gehäuse anbringbar, dass zumindest ein teilweises Abnehmen sowohl der ersten als auch der zweiten Gehäuseabdeckung detektierbar ist. An der wenigstens einen zweiten Einbauposition ist ein Öffnungsdetektor derart an dem Gehäuse anbringbar, dass nur ein zumindest teilweises Abnehmen der wenigstens einen zweiten Gehäuseabdeckung detektierbar ist, wenn ein Öffnungsdetektor an der wenigstens einen zweiten Einbauposition angebracht ist. Vorteile und Ausgestaltungen des zweiten Aspekts entsprechen im Wesentlichen den Vorteilen und Ausgestaltungen des ersten Aspekts.

Weitere vorteilhafte Ausgestaltungen der Erfindung sind in den angehängten Patentansprüchen sowie der nachfolgenden Beschreibung von Ausführungsbeispielen beschrieben. Die Ausführungsbeispiele werden anhand der folgenden Figuren beschrieben.

In den Figuren zeigen:
- Figur 1: eine Explosionsdarstellung eines Computers gemäß einer Ausgestaltung der Erfindung,
- Figur 2: eine perspektivische Darstellung des Computers gemäß Figur 1 in einer ersten Systemkonfiguration,
- Figur 3: eine perspektivische Darstellung des Computers gemäß Figur 1 in einer zweiten Systemkonfiguration, und
- Figur 4: eine perspektivische Darstellung eines Schalters zur Detektion einer Öffnung eines Gehäuses gemäß einer Ausgestaltung der Erfindung.

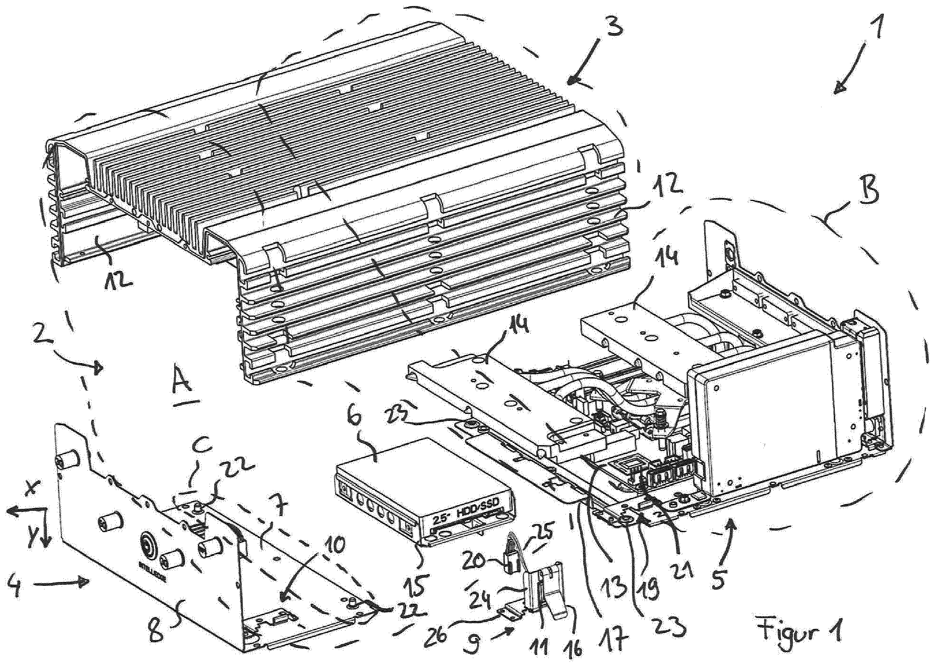

Figur 1 zeigt eine Explosionsdarstellung eines Computers 1 gemäß einer Ausgestaltung der Erfindung. Der Computer 1 hat ein Gehäuse 2. Das Gehäuse 2 besteht aus einem umgekehrt U-förmigen Deckel 3, einer L-förmigen Frontblende 4 und einem Gehäuseboden 5. Der umgekehrt U-förmige Deckel 3 ist über dem Gehäuseboden 5 angeordnet. Die Frontblende 4 kann mittels in dieser Figur nicht gezeigter Schrauben an dem Deckel 3 und dem Gehäuseboden 5 befestigt werden. An auf dem Gehäuseboden 5 senkrecht stehenden Seitenwänden 12 des Deckels 3 kann der Deckel 3 an dem Gehäuseboden 5 mittels in dieser Figur ebenfalls nicht gezeigter Schrauben befestigt werden. Zwischen dem Gehäuseboden 5 und dem Deckel 3 sind Komponenten des Computers 1, wie beispielsweise eine Systemplatine 13, Kühlelemente 14 und eine Festplatte 6 angeordnet.

Die Festplatte 6 ist in einem vorderen Bereich A des Computers 1 angeordnet. Der vordere Bereich A des Computers 1 befindet sich an einer Seite des Computers 1, an der das Gehäuse 2 mittels der L-förmigen Frontblende 4 verschließbar ist. Der vordere Bereich A ist insbesondere der Bereich des Computers 1, auf den ein Benutzer Zugriff erlangt, wenn die Frontblende 4 zumindest teilweise geöffnet ist.

Der vordere Bereich A ist von einem hinteren Bereich B räumlich durch einen Vorsprung 17 des Gehäusebodens 5 getrennt. Der hintere Bereich B ist insbesondere der Bereich des Computers 1, auf den ein Benutzer Zugriff erlangt, wenn der Deckel 3 zumindest teilweise geöffnet ist. In dem hinteren Bereich ist beispielsweise die Systemplatine 13 angeordnet. Der Vorsprung 17 steht senkrecht von dem Gehäuseboden 5 in ein Inneres des Gehäuses 2 ab und ist L-förmig ausgestaltet. Die Festplatte 6 ist in einer Festplattenhalterung 15 gelagert. Die Festplattenhalterung 15 ist mittels Schrauben an dem Vorsprung 17 des Gehäusebodens 5 befestigbar.

Die Frontblende 4 weist einen horizontalen Teil 7 und einen vertikalen Teil 8 auf. Ist die Frontblende 4 an dem Gehäuseboden 5 befestigt, so liegt der horizontale Teil 7 der Frontblende 4 in einer Ebene mit dem Gehäuseboden 5. Der vertikale Teil 8 der Frontblende 4 steht senkrecht auf den horizontalen Teil 7 der Frontblende 4. An dem horizontalen Teil 7 der Frontblende 4 befindet sich eine erste Halterung 10, an der ein Öffnungsdetektor in Form eines Schalters 9 zur Detektion einer Öffnung des Gehäuses 2 mittels Schrauben befestigt werden kann.

An einem dem Gehäuseboden 5 zugewandten Randbereich C des horizontalen Teils 7 der Frontblende 4 sind zwei Stifte 22 angeordnet. Die Stifte 22 stehen senkrecht in das Innere des Gehäuses 2 von dem horizontalen Teil 7 der Frontblende 4 ab. An dem Gehäuseboden 5 sind zwei Löcher 23 angeordnet, in die die Stifte 22 eingeführt werden, wenn die Frontblende 4 an dem Gehäuseboden 5 befestigt wird. Dies verhindert ein Herausziehen der Frontblende in einer Richtung X lotrecht zur Oberfläche des vertikalen Teils 8 der Frontblende 4. Die Frontblende 4 muss somit, um von dem Gehäuseboden 5 getrennt werden zu können, zumindest soweit in einer Richtung Y gegenläufig zu einer Erstreckungsrichtung der Stifte 22 nach unten bewegt werden, bis die Löcher 23 die Stifte 22 frei geben.

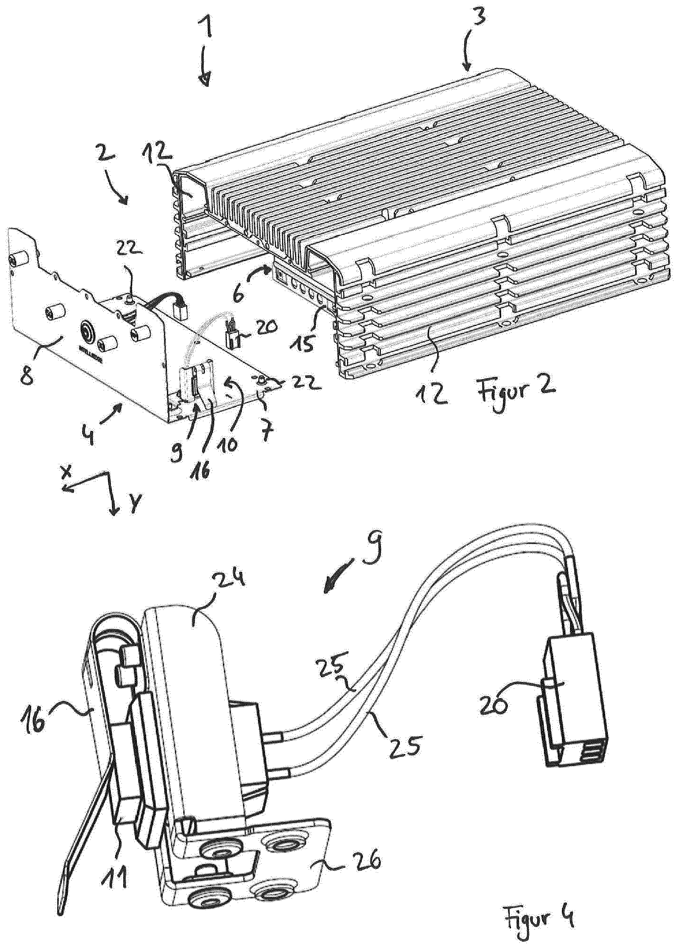

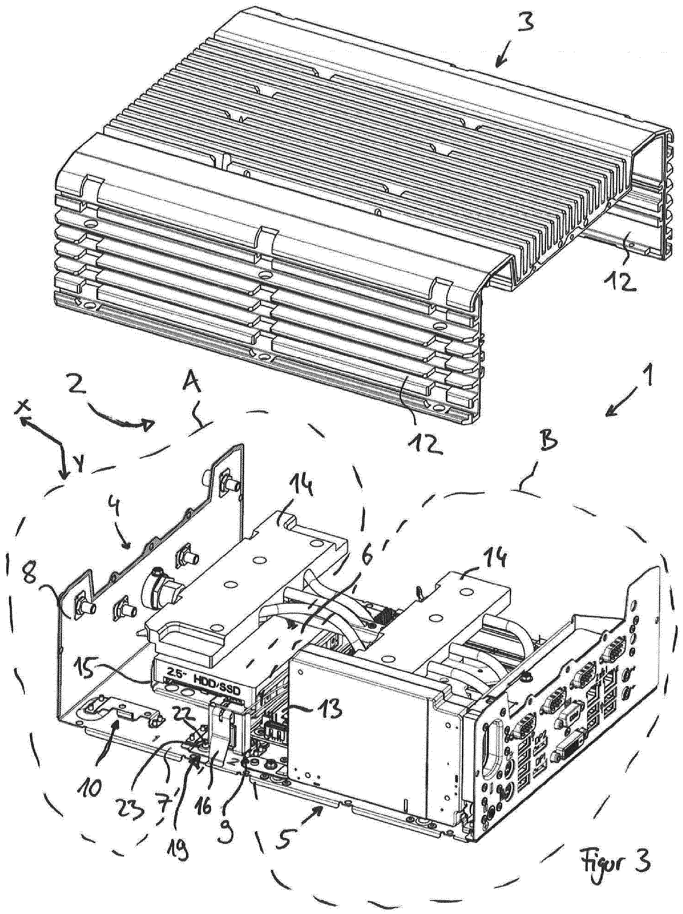

An dem Gehäuseboden 5 ist eine zweite Halterung 19 für den Schalter 9 angebracht. Die Ausgestaltung der zweiten Halterung 19 gleicht der Ausgestaltung der ersten Halterung 10, sodass der Schalter 9 wahlweise an der ersten oder der zweiten Halterung 10, 19 befestigt werden kann. Die Anbringung des Schalters 9 an der ersten Halterung 10 stellt eine erste Systemkonfiguration des Computers 1 dar, die ausführlich mit Bezug auf Figur 2 beschrieben wird. Die Anbringung des Schalters 9 an der zweiten Halterung 19 stellt eine zweite Systemkonfiguration des Computers 1 dar, die ausführlich mit Bezug auf Figur 3 beschrieben wird.

Der Schalter 9, wie er in diesem Ausführungsbeispiel verwendet wird, ist detailliert in Figur 4 dargestellt. Der Schalter 9 weist einen Taster 11, eine Federlasche 16, einen Steckverbinder 20 und ein Schaltergehäuse 24 auf. Der Steckverbinder 20 ist mit dem Taster 11 über Kabel 25 verbunden. An einem unteren Ende des Schaltergehäuses 24 ist ein Befestigungsfuß 26 angeordnet, mittels dem der Schalter 9 an der ersten Halterung 10 befestigt werden kann. Die Federlasche 16 ist mit einem ersten Ende der Lasche 16 an einem oberen Ende des Schaltergehäuses 24 befestigt. Die Federlasche 16 erstreckt sich über den Taster 11 und ist an einem freistehenden zweiten Ende von dem Taster 11 wegweisend abgewinkelt. Wirkt eine Kraft auf die Federlasche 16 in Richtung des Tasters 11, so drückt die Federlasche 16 den Taster 11 ein. Selbstverständlich können beliebig ausgestaltete Schalter oder sonstige Öffnungsdetektoren analog verwendet werden.

Sowohl in der ersten als auch in der zweiten Systemkonfiguration, wirkt eine Seitenwand 12 des Deckels 3 auf die Federlasche 16 des Schalters 9 ein und betätigt somit den Taster 11, wenn das Gehäuse 2 vollständig geschlossen ist. Gibt die Seitenwand 12 die Federlasche 16 frei, so wird ein Öffnen des Gehäuses 2 detektiert.

An der Systemplatine 13 ist ein 4-poliger Gegensteckverbinder 21 angebracht, an den der Steckverbinder 20 des Schalters 9 angeschlossen wird, unabhängig davon, ob der Schalter 9 an der ersten oder der zweiten Halterung 10, 19 befestigt ist. Über die Steckverbindung 20, 21 wird ein Zustand des Schalters 9 durch die Systemplatine 13 ausgewertet.

Figur 2 zeigt den Computer 1 in der Ausgestaltung gemäß Figur 1 in der ersten Systemkonfiguration, d.h. der Schalter 9 ist an der ersten Halterung 10 befestigt. In der Figur 2 befindet sich das Gehäuse 2 in einem ersten Öffnungszustand. Dieser erste Öffnungszustand ist dadurch gekennzeichnet, dass die L-förmige Frontblende 4 von dem Gehäuseboden 5 und dem Deckel 3 getrennt ist. Der Deckel 3 ist in diesem ersten Öffnungszustand an dem in dieser Figur nicht sichtbaren Gehäuseboden 5 befestigt.

Der erste Öffnungszustand ermöglicht einem Benutzer einen physikalischen Zugriff auf den vorderen Bereich A des Computers 1 und somit insbesondere auf die Festplattenhalterung 15 und die darin gelagerte Festplatte 6. Dieser erste Öffnungszustand ermöglicht jedoch keinen physikalischen Zugriff auf in dem hinteren Bereich B liegende Komponenten des Computers 1, wie beispielsweise die Systemplatine 13. Der vordere Bereich A ist von dem hinteren Bereich B durch den Vorsprung 17 räumlich abgegrenzt, sodass ein Durchgreifen von der Seite der Frontblende 4 durch den vorderen Bereich A in den hinteren Bereich B nicht oder nur sehr eingeschränkt möglich ist.

Da in der in Figur 2 gezeigten ersten Systemkonfiguration der Schalter 9 an der ersten Halterung 10 befestigt ist, wird der Schalter 9 ausgelöst, sobald die Frontblende 4 von dem Gehäuseboden 5 und dem Deckel 3 gelöst wird. Zusätzlich löst in dieser ersten Systemkonfiguration der Schalter 9 aus, wenn zwar die Frontblende 4 an dem Gehäuseboden 5 befestigt ist, aber der Deckel 3 abgenommen wird. In der ersten Systemkonfiguration, wie sie in Figur 2 gezeigt ist, wird somit jegliches Öffnen des Gehäuses 2 durch Abnehmen der Frontblende 4 oder des Deckels 3 durch eine Zustandsänderung des Schalters 9 detektiert. Auf diese Weise wird insbesondere sowohl ein physikalischer Zugriff auf den vorderen Bereich A als auch auf den hinteren Bereich B detektiert.

Eine Manipulation des Schalters 9 wird dadurch erschwert, dass, wie mit Bezug auf Figur 1 beschrieben, die Frontblende 4 zunächst in Y-Richtung von dem Gehäuseboden 5 gelöst werden muss. Das freistehende Ende der Federlasche 16 steht bei geschlossenem Gehäuse 2 mit der Seitenwand 12 in Kontakt, sodass eine Kraft auf den Taster 11 wirkt. Das freistehende Ende der Federlasche 16 berührt unmittelbar über dem horizontalen Teil 7 der Frontblende 4 die Seitenwand 12, sodass auch bei einem geringen Anheben des Deckels 3 oder Absenkens der Frontblende 4 in Y-Richtung die Seitenwand 12 die Federlasche 16 freigibt und der Schalter 9 somit auslöst.

Ein manuelles Blockieren des Tasters 11 oder der Federlasche 16 nachdem das Gehäuse 2 wenige Millimeter geöffnet ist, um ein Auslösen des Schalters 9 zu vermeiden, wird somit erheblich erschwert.

Figur 3 zeigt den Computer 1 in der Ausgestaltung gemäß Figur 1 in der zweiten Systemkonfiguration, d.h. der Schalter 9 ist an der zweiten Halterung 19 befestigt. Das Gehäuse 2 ist in Figur 3 in einem zweiten Öffnungszustand gezeigt. In dem zweiten Öffnungszustand ist die Frontblende 4 an dem Gehäuseboden 5 befestigt und der Deckel 3 von dem Gehäuseboden 5 und der Frontblende 4 getrennt.

Der zweite Öffnungszustand ermöglicht einem Benutzer einen physikalischen Zugriff auf den vorderen Bereich A und den hinteren Bereich B des Computers 1 und somit insbesondere sowohl auf die Festplatte 6 als auch auf die Systemplatine 13 und darauf angebrachte Komponenten, wie beispielsweise einen hier nicht erkennbaren Arbeitsspeicher und Prozessor.

Da in der in Figur 3 gezeigten zweiten Systemkonfiguration der Schalter 9 an der zweiten Halterung 19 befestigt ist, wird der Schalter 9 nur ausgelöst, wenn der Deckel 3 von dem Gehäuseboden 5 gelöst wird. In dieser zweiten Systemkonfiguration kann die Frontblende 4 abgenommen werden, ohne dass der Schalter 9 ausgelöst wird, solange der Deckel 3 an dem Gehäuseboden 5 befestigt bleibt. In der zweiten Systemkonfiguration, wie sie in Figur 3 gezeigt ist, wird somit nur ein Öffnen des Gehäuses 2 durch Abnehmen des Deckels 3 durch eine Zustandsänderung des Schalters 9 detektiert. Auf diese Weise wird lediglich ein Öffnen des Gehäuses 2 detektiert, wenn gleichzeitig ein physikalischer Zugriff auf den vorderen Bereich A und den hinteren Bereich B, d. h. in diesem Fall auf den gesamten Computer 1 erfolgt. Mit anderen Worten wird ein physikalischer Zugriff auf die Festplatte 6, wenn er über eine Abnahme der Frontblende 4 geschieht, in der zweiten Systemkonfiguration nicht detektiert. Der erste Öffnungszustand kann somit in der zweiten Systemkonfiguration eingenommen werden, ohne dass der Schalter 9 auslöst.

Weitere Ausgestaltungen der Erfindung sind selbstverständlich möglich. Insbesondere kann ein Computer mit mehr als zwei Systemkonfigurationen verwendet werden. In einem solchen Fall weist der Computer drei oder mehr Halterungen auf, an denen ein Schalter zur Detektion einer Öffnung eines Gehäuses des Computers befestigt werden kann. Auf diese Weise lassen sich drei und mehr Öffnungszustände des Gehäuses detektieren. Beispielsweise gibt es eine Systemkonfiguration, bei der jegliches Öffnen des Gehäuses detektiert wird und weitere Systemkonfigurationen, bei denen unabhängige Teilbereiche des Gehäuses überwachbar sind, oder bei denen stets kleiner werdende Teilbereiche des Gesamtbereichs des Gehäuses je nach Anordnung des Schalters überwachbar sind.

In einer weiteren alternativen Ausgestaltung eines Computers gemäß der Erfindung sind eine erste Halterung und eine zweite Halterung für einen Schalter zur Detektion einer Öffnung eines Gehäuses an einer Frontblende, wie sie beispielsweise in Figur 1 gezeigt ist, angebracht. Beispielsweise sind beide Halterungen an dem horizontalen Teil der Frontblende angebracht, die erste näher an dem vertikalen Teil der Frontblende als die zweite. Alternativ ist die erste Halterung an dem vertikalen Teil und die zweite Halterung an dem horizontalen Teil der Frontblende angebracht. In diesen Ausgestaltungen kann ein Öffnen des Gehäuses detektiert werden, je nachdem, wie weit die Frontblende geöffnet wird, in Abhängigkeit davon, ob der Schalter an der ersten oder der zweiten Halterung befestigt ist.

### Bezugszeichenliste

- 1: Computer
- 2: Gehäuse
- 3: U-förmiger Deckel
- 4: L-förmige Frontblende
- 5: Gehäuseboden
- 6: Festplatte
- 7: horizontaler Teil der Frontblende
- 8: vertikaler Teil der Frontblende
- 9: Schalter
- 10: erste Halterung
- 11: Taster
- 12: Seitenwand
- 13: Systemplatine
- 14: Kühlelement
- 15: Festplattenhalterung
- 16: Federlasche
- 17: Vorsprung
- 19: zweite Halterung
- 20: Steckverbinder
- 21: Gegensteckverbinder
- 22: Stift
- 23: Loch
- 24: Schaltergehäuse
- 25: Kabel
- 26: Befestigungsfuß
- A: vorderer Bereich des Computers
- B: hinterer Bereich des Computers
- C: Randbereich des horizontalen Teils der Frontblende
- X, Y: Richtung

## Patentansprüche

1. Elektrisches Gerät, insbesondere ein Computer (1), umfassend
- ein Gehäuse (2) mit einem ersten und wenigstens einem zweiten Öffnungszustand, und
- einen Öffnungsdetektor, wobei
- das elektrische Gerät eine erste Einbauposition und wenigstens eine zweite Einbauposition für den Öffnungsdetektor aufweist,
- der Öffnungsdetektor, wenn er an der ersten Einbauposition angeordnet ist, sowohl den ersten als auch den wenigstens einen zweiten Öffnungszustand detektiert, und
- der Öffnungsdetektor, wenn er an der wenigstens einen zweiten Einbauposition angeordnet ist, nur den wenigstens einen zweiten Öffnungszustand detektiert.

2. Elektrisches Gerät gemäß Anspruch 1, wobei der erste Öffnungszustand einen Zugriff auf einen ersten Bereich (A) des elektrischen Geräts und der wenigstens eine zweite Öffnungszustand Zugriff auf wenigstens einen zweiten Bereich (B) des elektrischen Geräts gewährt.

3. Elektrisches Gerät gemäß Anspruch 2, wobei der erste Bereich (A) des elektrischen Geräts von dem wenigstens einen zweiten Bereich (B) des elektrischen Geräts räumlich getrennt ist.

4. Elektrisches Gerät gemäß einem der Ansprüche 1 bis 3, wobei
- das Gehäuse (2) eine erste Gehäuseabdeckung und eine benachbart zu der ersten Gehäuseabdeckung angeordnete zweite Gehäuseabdeckung umfasst,
- in dem ersten Öffnungszustand die erste Gehäuseabdeckung zumindest teilweise geöffnet ist und in dem zweiten Öffnungszustand die zweite Gehäuseabdeckung zumindest teilweise geöffnet ist, und
- der Öffnungsdetektor an der ersten Einbauposition derart an der ersten Gehäuseabdeckung angeordnet ist, dass die zweite Gehäuseabdeckung nur dann auf den Öffnungsdetektor einwirkt, wenn sowohl die erste als auch die zweite Gehäuseabdeckung geschlossen ist.

5. Elektrisches Gerät gemäß Anspruch 4, ferner umfassend einen Gehäuseboden (5), wobei der Öffnungsdetektor an der zweiten Einbauposition derart an dem Gehäuseboden (5) angeordnet ist, dass die zweite Gehäuseabdeckung nur dann auf den Öffnungsdetektor einwirkt, wenn die zweite Gehäuseabdeckung geschlossen ist.

6. Elektrisches Gerät gemäß Anspruch 5, wobei die erste Gehäuseabdeckung oder der Gehäuseboden (5) wenigstens einen sich in einer ersten Richtung (Y) erstreckenden Stift (22) und entsprechend der Gehäuseboden (5) oder die erste Gehäuseabdeckung wenigstens ein Loch (23) aufweist und der wenigstens eine Stift (22) bei geschlossener erster Gehäuseabdeckung in das wenigstens eine Loch (23) eingreift, so dass ein Herausziehen der ersten Gehäuseabdeckung in einer zweiten, zu der ersten Richtung (Y) senkrecht stehenden Richtung (X) verhindert wird.

7. Elektrisches Gerät gemäß einem der Ansprüche 1 bis 6, ferner umfassend eine in dem Gehäuse (2) angeordnete Systemplatine (13), wobei die Systemplatine (13) einen Gegensteckverbinder (21) aufweist, mit dem ein Steckverbinder (20) des Öffnungsdetektors elektrisch verbunden ist, sowohl wenn der Öffnungsdetektor an der ersten Einbauposition, als auch wenn der Öffnungsdetektor an der wenigstens einen zweiten Einbauposition angeordnet ist.

8. Elektrisches Gerät gemäß einem der Ansprüche 1 bis 7, ferner umfassend eine Vorrichtung zur Auswertung eines Zustands des Öffnungsdetektors, die dazu eingerichtet ist, in Abhängigkeit des durch den Öffnungsdetektor detektierten Öffnungszustands wenigstens eines der folgenden Ereignisse zu bewirken:
- einen visuellen, auditiven oder sonstigen Alarm,
- einen Eintrag in ein Protokoll, oder
- einen Eingriff auf eine Stromversorgung oder eine sonstige Komponente des elektrischen Geräts.

9. Elektrisches Gerät gemäß Anspruch 8, wobei die Vorrichtung zur Auswertung des Zustands des Öffnungsdetektors unterschiedliche Ereignisse bewirkt, in Abhängigkeit davon, ob der Öffnungsdetektor an der ersten oder der wenigstens einen zweiten Einbauposition angeordnet ist.

10. Gehäuse (2) für ein elektrisches Gerät, insbesondere einen Computer (1), aufweisend eine erste und wenigstens eine zweite Gehäuseabdeckung und eine erste und wenigstens eine zweite Einbauposition für einen Öffnungsdetektor, wobei
- ein Öffnungsdetektor an der ersten Einbauposition derart an dem Gehäuse (2) anbringbar ist, dass ein zumindest teilweises Abnehmen sowohl der ersten als auch der wenigstens einen zweiten Gehäuseabdeckung detektierbar ist, und
- ein Öffnungsdetektor an der wenigstens einen zweiten Einbauposition derart an dem Gehäuse (2) anbringbar ist, dass nur ein zumindest teilweises Abnehmen der wenigstens einen zweiten Gehäuseabdeckung detektierbar ist, wenn ein Öffnungsdetektor an der wenigstens einen zweiten Einbauposition angebracht ist.
